# EUROPÄISCHE PATENTSCHRIFT

(11) **EP 1 167 105 B1**
(45) Veröffentlichungstag und Bekanntmachung des Hinweises auf die Patenterteilung: **21.04.2004**
(21) Anmeldenummer: 01103175.4
(22) Anmeldetag: 10.02.2001
(51) Int. Cl.: B60K 11/02, B60K 11/04

(54) **Kühleinrichtung für Brennkraftmaschinen**
Cooling arrangement for combustion engines
Dispositif de refroidissement pour moteur à combustion interne

(30) Priorität: 21.06.2000 DE 10030355
(43) Veröffentlichungstag der Anmeldung: 02.01.2002
(73) Patentinhaber: Modine Manufacturing Company, Racine, Wisconsin 53403-2552 (US)
(72) Erfinder: Kalbacher, Klaus, 72414 Rangendingen (DE)
(74) Vertreter: Kratzsch, Volkhard, Dipl.-Ing.

(56) Entgegenhaltungen:
- DE-A- 4 023 042
- DE-A- 4 437 946

## Beschreibung

Die Erfindung bezieht sich auf eine Kühleinrichtung für Brennkraftmaschinen, insbesondere von Kraftfahrzeugen, mit den Merkmalen im Oberbegriff des Anspruchs 1.

Bei einer bekannten Kühleinrichtung dieser Art (DE 44 37 946 C2) weist die Kühleinrichtung als ersten Kühler einen Motorwasserkühler auf, dem ein Ladeluftkühler vorgeschaltet ist, der sich nur über einen Teil der Höhe des Motorwasserkühlers erstreckt und dessen unteren Teil nicht überdeckt. In diesem Bereich ist dem Motorwasserkühler als weiterer Kühler ein Ladeluftkühler vorgeschaltet, der unterhalb eines Stoßfängers zwischen diesem und einem Unterbau des Kraftfahrzeuges angeordnet ist. Im Bereich des nicht vom Ladeluftkühler überdeckten unteren Teils des Motorwasserkühlers ist rückseitig dieses beim Luftauslass ein Luftkanal angeordnet, dessen Eintrittsöffnung an die Rückseite des Motorwasserkühlers anschließt und der sich nach unten unter die Unterbodenverkleidung des Fahrzeuges erstreckt. Der Luftkanal ist nach unten abgebogen, wobei seine Austrittsöffnung so angeordnet ist, dass die rückseitig vom Motorwasserkühler in den Luftkanal eintretende und durch den Luftkanal strömende Kühlluft unterhalb einer Unterbodenverkleidung des Fahrzeuges austritt. Der weitere Kühler in Form des Ladeluftkühlers ist als separates Bauteil gestaltet und fahrzeugseitig befestigt, worauf in dieser Schrift nicht eingegangen ist. Üblicher Weise sind für die Befestigung eines solchen weiteren Kühlers, z.B. in Form eines Ölkühlers, an diesem besondere Haltelaschen angebracht. Diese sind kostenaufwendig, da diese bei der Herstellung des metallischen Kühlers als besondere Elemente an diesem befestigt werden müssen, z.B. durch Schrauben, Löten, Schweißen od. dgl. Für die Führung der rückseitig dieses weiteren Kühlers, z.B. Ölkühlers, entstehenden Abluft und zur Bildung eines Luftkanals dafür sind üblicher Weise am weiteren Kühler, insbesondere Ölkühler, besondere Blechteile befestigt, die ebenfalls kostenaufwendig sind. Bei derartigen Kühleinrichtungen, die im vorderen Bereich eines Kraftfahrzeuges angeordnet werden, besteht in hohem Maße das Problem, dass dafür nur ein knapper, begrenzter Bauraum zur Verfügung steht und daher Kühleinrichtungen dieser Art kompakt und platzsparend gestaltet sein müssen. Dem genügt die beschriebene bekannte Kühleinrichtung nicht. Darüber hinaus ist die beschriebene Gestaltung hinsichtlich des Materials und der Bearbeitung und Montage kostenaufwendig.

Der Erfindung liegt die Aufgabe zugrunde, eine Kühleinrichtung für Brennkraftmaschinen der eingangs genannten Art so auszubilden, dass diese möglichst kostengünstig mit verringertem Materialaufwand und so kompakt gestaltet ist, dass dafür ein reduzierter Bauraum ausreichend ist.

Die Aufgabe ist bei einer Kühleinrichtung für Brennkraftmaschinen der eingangs genannten Art gemäß der Erfindung durch die Merkmale im Anspruch 1 gelöst. Dadurch, dass der weitere Kühler in einen diesen umfassenden und zugleich den Luftkanal enthaltenden Luftkasten eingesetzt ist, ergibt sich ein einbaufertiges Kühlmodul, bei dem zugleich die Führung für die Abluft des Kühlers durch den enthaltenen Luftkanal verwirklicht ist, der die Luftführung um den weiteren Kühler herum und die Führung der Abluft bewirkt. Die Abluft kann so geleitet werden, dass diese z.B. nachgeordnete Aggregate zusätzlich kühlen kann, oder statt dessen so, dass die Abluft z.B. aus dem Motorbereich herausgeleitet wird und dadurch die Wärme aus diesem Bereich abgeführt wird. Dadurch, dass der Kühler im Luftkasten enthalten und dieses Kühlmodul am ersten Kühler lösbar befestigbar ist, entfallen teuere Haltelaschen am weiteren Kühler, die sonst zu dessen Befestigung notwendig sind. Aufgrund der lösbaren Spannmittel, mit denen der Luftkasten und der weitere Kühler zusammengespannt sind, sind beide Bauteile nicht nur zu einem einbaufertigen Kühlmodul miteinander verbunden, sondern dadurch ist zugleich der Luftkasten mit Luftkanal mittels des enthaltenen Kühlers versteift, so dass der Luftkasten dünnwandig und damit unter Material- und Gewichtsersparnis und somit kostengünstig verwirklicht werden kann. Von Vorteil ist ferner, dass der Luftkasten insgesamt auch bauraumsparend ausgebildet werden kann. Eine Kostenersparnis ergibt sich ferner dadurch, dass der luftauslassseitig des Kühlers vorhandene Luftkanal durch den Luftkasten selbst verwirklicht ist und somit zusätzliche besondere Leitbleche od. dgl. Blechteile, die sonst am Kühler zu befestigen waren, entfallen. Aufgrund der Befestigbarkeit des beschriebenen Kühlmoduls als Ganzes z.B. über am Luftkasten kostengünstig angeformte Befestigungsmittel ergibt sich eine weitere Kostenersparnis sowie Platzersparnis und Vereinfachung, auch Montagevereinfachung.

Weitere besondere Erfindungsmerkmale und Ausgestaltungen enthalten die Unteransprüche.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: eine schematische Vorderansicht einer Kühleinrichtung für Brennkraftmaschinen,
- Fig. 2: eine schematische, zum Teil geschnittene Seitenansicht der Kühleinrichtung in Fig. 1,

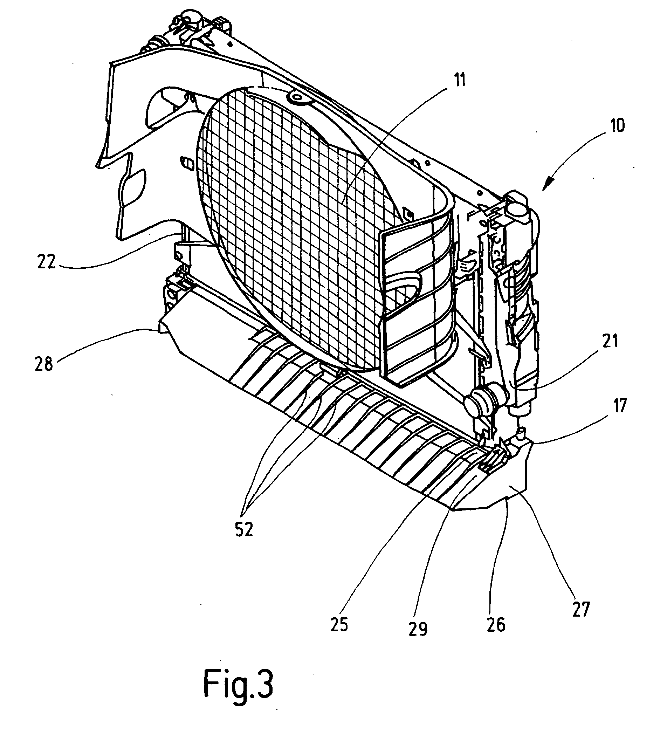

- Fig. 3: eine schematische, perspektivische Rückansicht einer Kühleinrichtung für Brennkraftmaschinen entsprechend Fig. 1 in Detaildarstellung,
- Fig. 4: eine schematische, teilweise geschnittene Seitenansicht der Kühleinrichtung in Fig. 3,
- Fig. 5: eine schematische perspektivische Ansicht eines Luftkastens der Kühleinrichtung in Fig. 1 - 4,
- Fig. 6 und 7: jeweils einen schematischen Schnitt entlang der Linie VI - VI bzw. VII - VII in Fig. 1,
- Fig. 8: eine schematische perspektivische Ansicht eines Teils der Kühleinrichtung von vorn mit einem Spannmittel.

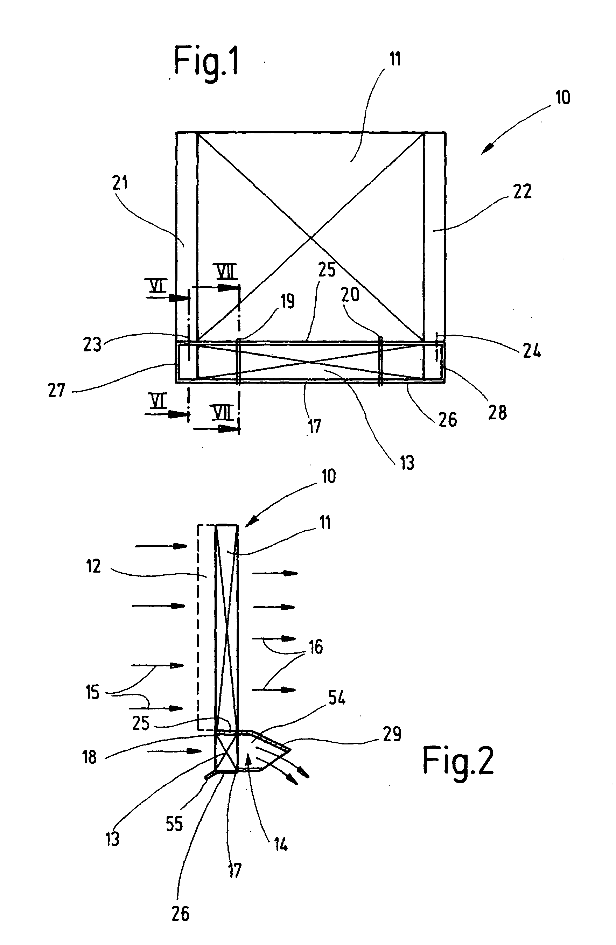

In den Zeichnungen ist eine Kühleinrichtung 10 für eine Brennkraftmaschine, insbesondere eines Kraftfahrzeuges, schematisch gezeigt, ohne Einzelheiten der Brennkraftmaschine. Die Kühleinrichtung 10 kann mehrere einzelne Kühler aufweisen, z.B. einen mit Luft beaufschlagbaren ersten Kühler 11 für das Kühlmittel der Brennkraftmaschine, wobei es sich bei diesem ersten Kühler 11 insbesondere um einen Wasserkühler handelt. In Fig. 2 ist gestrichelt angedeutet, dass dem ersten Kühler 11 z.B. ein Ladeluftkühler 12 vorgeschaltet sein kann. Teil der Kühleinrichtung 10 ist ferner ein ebenfalls mit Luft beaufschlagbarer weiterer Kühler 13 für ein anderes zu kühlendes Medium, z.B. Motoröl, Getriebeöl od. dgl. Diesem Kühler 13 ist ein besonderer Luftkanal 14 zur geführten Ableitung der Luft des Kühlers 13 zugeordnet. Die die Kühleinrichtung 10 auf der Vorderseite anströmende Luft ist mit Pfeilen 15 verdeutlicht, während die Luft, die die Kühleinrichtung 10 passiert hat und hinter dieser abströmt, mit Pfeilen 16 angedeutet ist.

Der weitere Kühler 13 ist in einen Luftkasten 17 eingesetzt, der aus einem einstückigen Formteil, insbesondere aus Kunststoff, gebildet und als etwa rechteckförmiges Langteil ausgebildet ist. Der Luftkasten 17 ist dabei insbesondere als dünnwandiges Leichtbauteil und/oder Kompaktbauteil ausgebildet, wobei dessen einzelne Wandungen dünnwandig mit einer Querschnittsdicke vorzugsweise etwa zwischen 2 und 3 mm ausgebildet sind. Der Luftkasten 17 mit dem darin enthaltenen Kühler 13 ist innerhalb der Ebene angeordnet, innerhalb der sich auch der erste Kühler 11 erstreckt, wobei sich der Luftkasten 17 mit enthaltenem Kühler 13 ohne wesentlichen Abstand an eine Seite des ersten Kühlers 11, insbesondere an dessen in Fig. 1 und 2 unten befindliche Unterseite, anschließt. Hierbei ist der Luftkasten 17 mit enthaltenem Kühler 13 mit Querverlauf unterhalb des ersten Kühlers 11 angeordnet, wobei sich dieser Kühlmodul, gebildet aus Luftkasten 17 mit enthaltenem Kühler 13, im wesentlichen über die gesamte Breite des Kühlers 11 erstreckt. Der Luftkasten 17 umfasst den Kühler 13 ringsum und enthält zugleich den Luftkanal 14. Die Einlassöffnung 18 des Luftkastens 17 verläuft etwa in der gleichen Ebene wie der vorderseitige Lufteinlass des Kühlers 13 und rings um diesen und ist etwa schlitzartig, wobei die den Kühler 13 rings um überströmende Luft vom Lufteinlass her in den Luftkanal 14 einströmen kann. Der Luftkanal 14 erstreckt sich über den rückseitigen Auslass des Kühlers 13 hinaus. Der Kühler 13 ist mit dem Luftkasten 17 über lösbare Spannmittel 19, 20 in vertikaler Richtung gemäß Fig. 1 und 2 fest, jedoch lösbar, zusammengespannt. Ferner ist der Luftkasten 17 mit dem darin enthaltenen Kühler 13 am ersten Kühler 11 unterseitig dieses und dabei im Bereich des linken und rechten, nur schematisch angedeuteten Sammelkastens 21, 22, insbesondere Wasserkastens, mit schematisch angedeuteten Befestigungsmitteln 23 bzw. 24 lösbar gehalten.

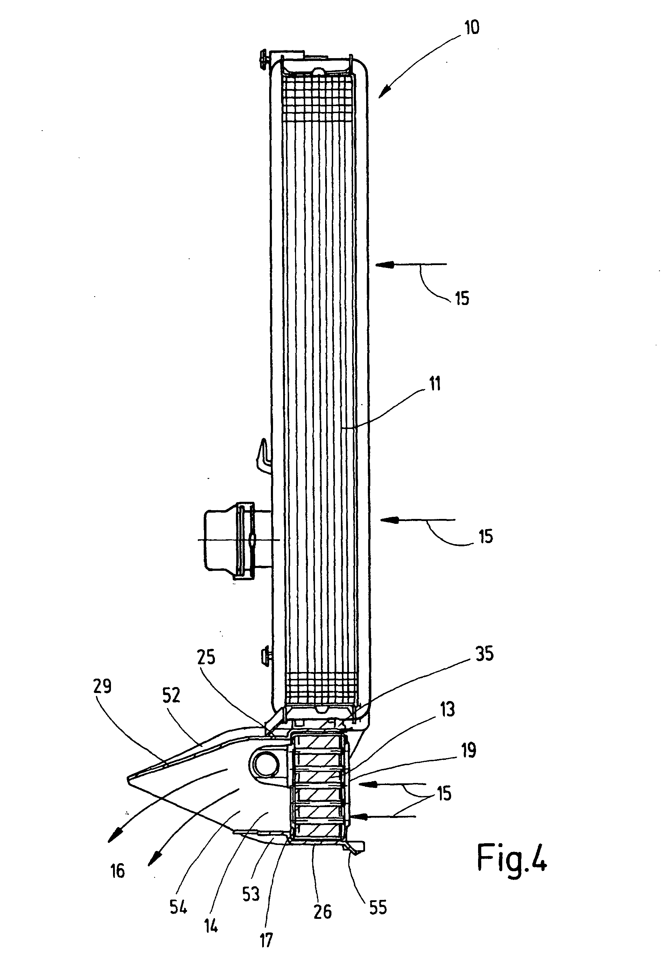

Wie sich insbesondere aus Fig. 4, 6 und 7 ergibt, weist der Luftkasten 17 einen kanalartigen Luftleitrahmen auf, der den Kühler 13 umfasst und luftauslassseitig des Kühlers 13 mit seiner insbesondere oberseitigen Leitwand 25 über eine dazu etwa parallele, insbesondere unterseitige, Wand 26 rückseitig hinausragt, wobei an beiden Stirnenden Stirnwände 27 und 28 vorgesehen sind, über die die Leitwand 25 mit der unteren Wand 26 verbunden ist und die zusammen mit vorgenannten den kanalartigen Luftleitrahmen mit darin verlaufendem Luftkanal 14 bilden. Die sich über die untere Wand 26 hinaus erstreckende obere Leitwand 25 verläuft zumindest auf einem Abschnitt schräg in Bezug auf die untere Wand 26. Zusätzlich dazu oder statt dessen kann die Leitwand 25 auch gebogen verlaufen. Der schräge Abschnitt der Leitwand 25 ist mit 29 angedeutet.

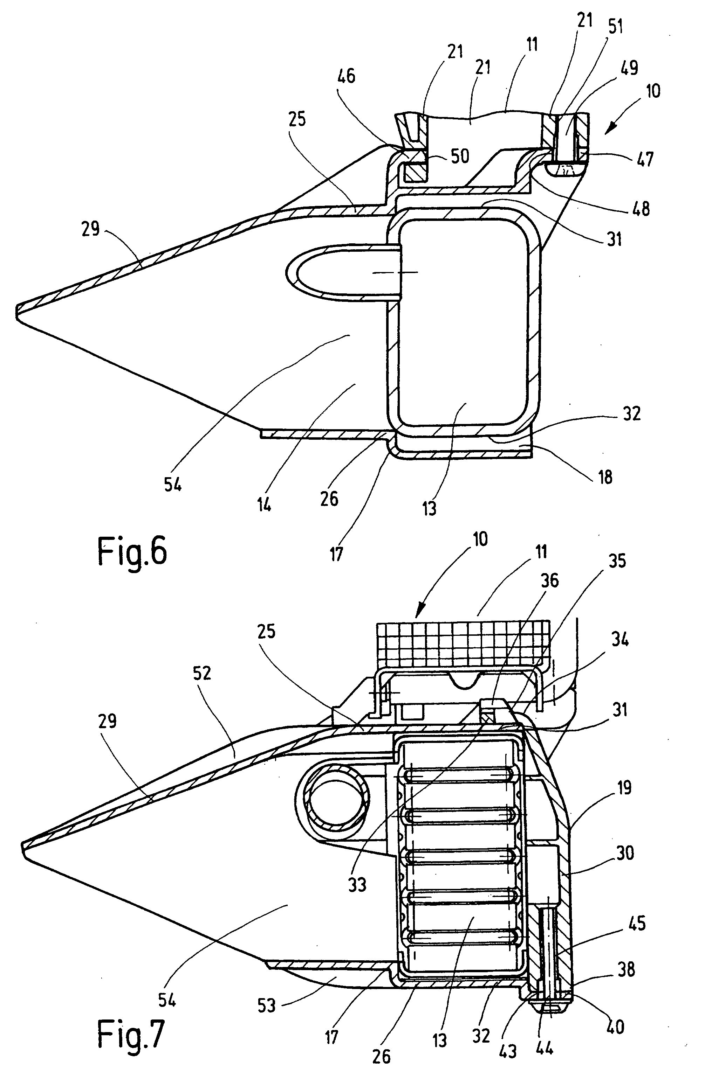

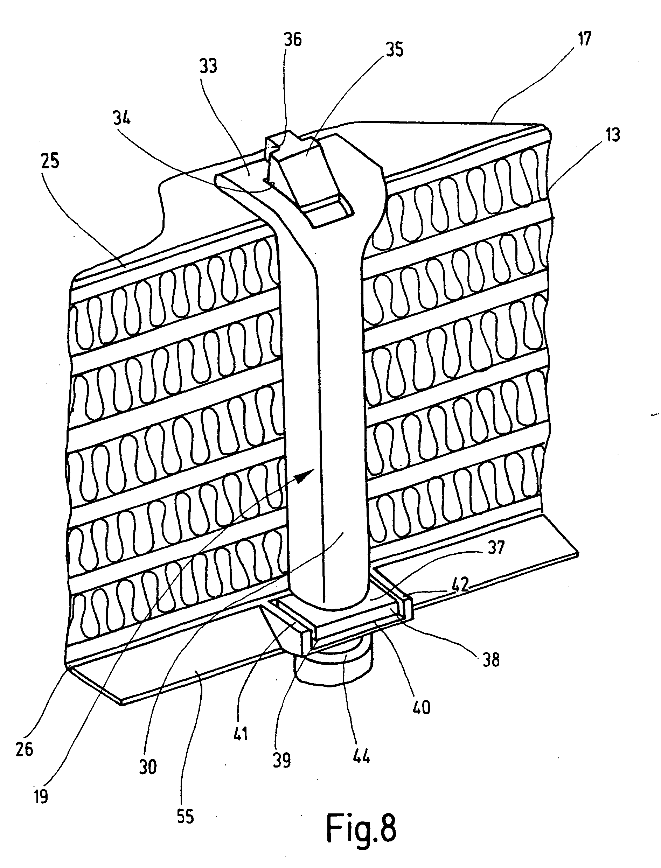

Die in Fig. 1 nur schematisch angedeuteten beidseitigen und im Bereich des Lufteinlasses des Kühlers 13 befindlichen Spannmittel 19, 20 ergeben sich im Detail insbesondere aus Fig. 7 und 8 und sind anhand dieser nachstehend näher erläutert, und hierbei am Beispiel eines Spannmittels 19, wobei das Spannmittel 20 in gleicher Weise ausgebildet ist. Diese Spannmittel 19, 20 zwischen dem Luftkasten 17 und dem Kühler 13 können ganz allgemein aus Klipsen, Klammern, Ankern, Haken, Ösen od. dgl. Rastgliedern gebildet sein. Sie sind zwischen den beiden längsverlaufenden Wandungen, d.h. der oberseitigen Leitwand 25 und der unterseitigen Wand 26, des Luftkastens 17 einerseits und dem Kühler 13 andererseits, und hierbei vorzugsweise im Bereich der Einlassöffnung 18, vorgesehen. Beim gezeigten Ausführungsbeispiel sind diese lösbaren Spannmittel 19, 20 jeweils aus Zuggliedern 30 gebildet, die im Bereich der Einlassöffnung 18 angeordnet und dem Lufteinlass des Kühlers 13 vorgelagert zwischen den beiden Wänden 25 und 26 des Luftkastens 17 verlaufen. Die Zugglieder 30 greifen an beiden Wänden 25, 26 an und verspannen diese mit den zugewandten Seiten, d.h. mit der Oberseite 31 und der Unterseite 32, des enthaltenen Kühlers 13, wodurch der Luftkasten 17, insbesondere dessen dünnwandige Wände 25, 26, mittels des enthaltenen Kühlers 13 versteift wird; denn der Kühler 13 besteht in üblicher Weise aus einem metallischen biegesteifen Bauteil bekannter Art und ist dadurch in der Lage, die auf dessen Oberseite 31 bzw. Unterseite 32 gespannten Wände 25, 26 des Luftkastens 17 zu versteifen, so dass diese Wände 25, 26 und auch die übrigen Wände des Luftkastens 17 deswegen sehr dünnwandig und in materialsparender Weise ausgebildet werden können. Der Luftkasten 17 kann somit als kostengünstiges, leichtes, kompaktes und bauraumsparendes Bauteil gestaltet sein, das der sicheren Befestigung des darin enthaltenen Kühlers 13 am Kühler 11 dient und zugleich den Luftkanal 14 mit Luftführung enthält und bildet. Der Kühler 13 mit Luftkasten 14 stellt ein eigenes Kühlmodul dar, das vor der Anbringung am Kühler 11 fertig zusammengebaut werden kann. Dieses Kühlmodul verwirklicht in einem die Luftführung und die Befestigung des Kühlers 13, wodurch sonst notwendige teuere Haltelaschen am Kühler 13, die sonst zu dessen Befestigung notwendig waren, entfallen. Durch die Verspannung mittels der Spannmittel 19, 20 wird die Steifigkeit des Kühlers 13 zur Aussteifung des Luftkastens 17 genutzt, so dass der Luftkasten 17 mit den vorstehend angegebenen Vorteilen und Besonderheiten ausgeführt werden kann. Der Luftkasten 17 bildet zugleich ein strömungsgünstiges Luftleitteil mit enthaltenem Luftkanal 14 zur Luftführung um den Kühler 13 herum und nach hinten mit Führung der rückseitigen Abluft gezielt durch den schrägen Abschnitt 29 z.B. zur nachfolgenden Kühlung nachfolgender weiterer Aggregate der nicht gezeigten Brennkraftmaschine.

Die Zugglieder 30 sind in Bezug auf den Luftkasten 17 verdrehgesichert gestaltet und/oder aufgenommen. Sie weisen an einem Ende, z.B. am in Fig. 7 und 8 oberen Ende, eine quer abstrebende Lasche 33 auf, die eine z.B. viereckförmige Öffnung 34 enthält. Der Luftkasten 17 weist in Zuordnung dazu je Zugglied 30 einen an der oberen Wand 25 angeformten und nach außen überstehenden Vorsprung 35 auf, der beim Auflegen der Lasche 33 formschlüssig in die Öffnung 34 eingreift. Der Vorsprung 35 ist am freien Ende mit einem quer und hierbei nach hinten abstehenden Sicherungsvorsprung 36 versehen, der die Lasche 33 außen übergreift. Der Vorsprung 35 bildet mitsamt dem Sicherungsvorsprung 36 somit einen nach hinten offenen Einhängehaken zum Einhängen der Lasche 33 mit ihrer Öffnung 34.

Die Zugglieder 30 weisen an einem Ende, vorzugsweise am unteren, der Lasche 33 gegenüberliegenden Ende, ein Verdrehsicherungselement 37 auf, das insbesondere eine formschlüssige Verdrehsicherung des Zuggliedes 30 in Bezug auf den Luftkasten 17 bewirkt. Das Verdrehsicherungselement 37 besteht insbesondere aus einem vieleckigen, z.B. viereckigen, Fußteil 38 des jeweiligen Zuggliedes 30. Der Luftkasten 17 weist je Zugglied 30 im Bereich der Einlassöffnung 18 vorzugsweise am Vorderrand der unteren Wand 26 eine Aufnahme 39 für das Verdrehsicherungselement 37 auf, in der das Verdrehsicherungselement 37 formschlüssig aufnehmbar ist. Die Aufnahme 39 ist vorzugsweise als konsolenartiger, etwa U-förmiger Vorsprung 40 mit beidseitigen Seitenwangen 41, 42 ausgebildet, zwischen denen der Fußteil 38 formschlüssig aufnehmbar ist. Die Aufnahme 39, insbesondere der Vorsprung 40, enthält eine Bohrung 43, die von einer Schraube 44 oder einem andersartigen Schraubbolzen durchsetzbar ist. Das Zugglied 30 enthält im unteren Teil eine bis nach unten durchgehende Bohrung 45 für das Eingreifen der Schraube 44, die sich z.B. als selbstschneidende Blechschraube in die Bohrung 45 einschneidet. Beim Einschrauben der Schraube 44 (Fig. 7) werden beide Wände 25, 26 in vertikaler Richtung gemäß Fig. 7 zusammen und auf die Oberseite 31 bzw. Unterseite 32 des Kühlers 13 gespannt. Dort, wo beim Schrauben der Schraube 24 das Schraubmoment auf das Zugglied 30 wirkt, nämlich im Bereich des Fußteiles 38, wird dieses verdrehgesichert in der Aufnahme 39 aufgenommen.

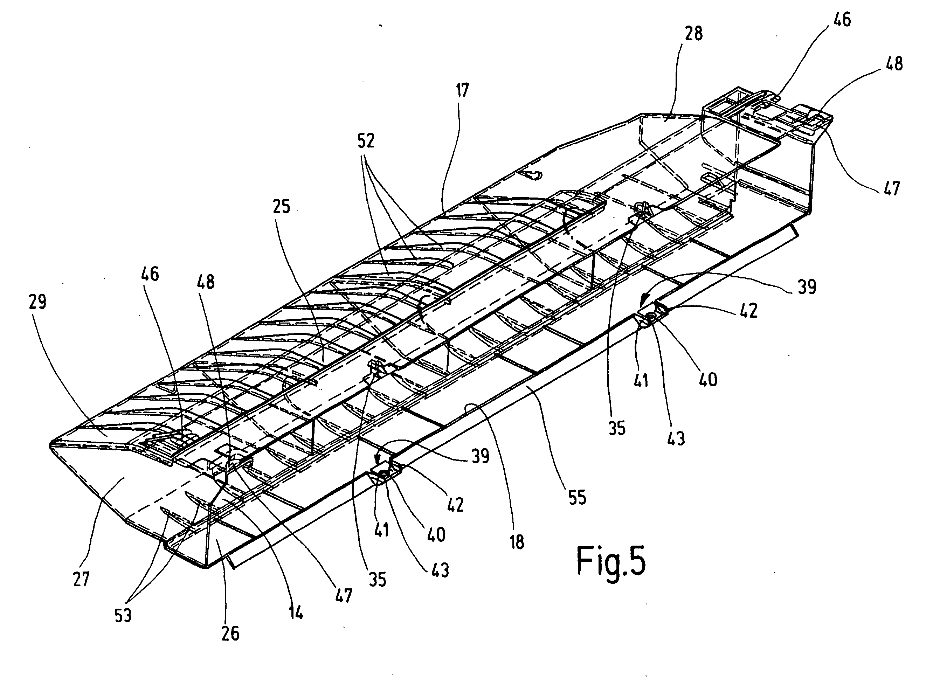

Die an beiden Enden des Luftkastens 17 vorgesehenen Befestigungsmittel 23, 24 (Fig. 1) sind nachfolgend anhand von Fig. 5 und 6 erläutert. Als Befestigungsmittel dienen am Luftkasten 17 vorzugsweise angeformte Haken 46 sowie in Abstand davon verlaufende Haltelaschen 47 mit darin enthaltener Bohrung 48. Die Befestigungsmittel 23, 24 weisen ferner jeweilige Schrauben 49 od. dgl. Haltebolzen auf, z.B. selbsteinschneidende Schrauben, die die Bohrung 48 in der Haltelasche 47 durchsetzen. Diese beschriebenen Befestigungsmittel sind Teil des Luftkastens 17 und sind oberseitig des Luftkastens 17 an dessen beiden Endbereichen vorgesehen. Der erste Kühler 11, insbesondere dessen Sammelkästen 21, 22, weisen entsprechende Aufnahmen 50 und 51 für diese Befestigungsmittel 23, 24 auf. Die dem jeweiligen Haken 46 zugeordnete Aufnahme 50 besteht aus einer entsprechenden Einhängeöffnung, während die der Schraube 49 zugeordnete Aufnahme 51 als Einschrauböffnung für die Schraube 49 ausgebildet ist. Diese Aufnahmen 50, 51 sind in kostengünstiger Weise an den mit Vorzug aus Kunststoff gebildeten Sammelkästen 21, 22 des ersten Kühlers 11 mit angeformt und bedingen ebenso wie die beschriebenen Befestigungsmittel 23, 24 am Luftkasten 17 keinen besonderen zusätzlichen Aufwand.

Der Luftkasten 17 ist auf der Außenseite der Leitwand 25 und unteren Wand 26, zumindest auf einem Teilbereich dieser, mit äußeren angeformten und versteifenden Querrippen 52 bzw. 53 versehen, die in Abständen voneinander angeordnet sind. Ferner enthält der Luftkasten 17 innere Querrippen 54 luftauslassseitig des Kühlers 13, die sich dort vertikal zwischen der Leitwand 25 und der unteren Wand 26 erstrecken und diese verbinden und abstützen, wobei auch diese Querrippen 54 in Abständen voneinander angeordnet sind. Im Bereich einer vorzugsweise unteren Vorderkante der Einlassöffnung 18 an der unteren Wand 26 weist der Luftkasten 17 eine schräg verlaufende Rippe 55 auf, die schräg nach vorn und unten gerichtet und z.B. als Anström- und Leitlippe gestaltet ist. Diese Rippe 55 kann statt dessen auch bogenförmig oder in sonstiger Weise strömungsgünstig geformt sein. Sie dient der besseren Anströmung und Vermeidung etwaiger Wirbel ebenso wie der rückseitig angeordnete schräge Abschnitt 29.

## Patentansprüche

1. Kühleinrichtung für Brennkraftmaschinen, insbesondere von Kraftfahrzeugen, mit einem mit Luft beaufschlagbaren ersten Kühler (11) für das Kühlmittel der Brennkraftmaschine, einem mit Luft beaufschlagbaren weiteren Kühler (13) für ein anderes zu kühlendes Medium, z.B. Motoröl, Getriebeöl od. dgl., und einem Luftkanal (14) zur geführten Ableitung der Abluft des weiteren Kühlers (13),
**dadurch gekennzeichnet,**
**dass** der weitere Kühler (13) in einen diesen umfassenden und zugleich den Luftkanal (14) enthaltenden Luftkasten (17) eingesetzt ist, dessen Einlassöffnung (18) etwa in der gleichen Ebene wie der Lufteinlass des enthaltenen Kühlers (13) verläuft und der sich mit seinem Luftkanal (14) über den Luftauslass des Kühlers (13) hinaus erstreckt, und dass der weitere Kühler (13) mit dem Luftkasten (17) über lösbare Spannmittel (19, 20) fest zusammengespannt ist und am ersten Kühler (11) gehalten ist.

2. Kühleinrichtung nach Anspruch 1,
**dadurch gekennzeichnet,**
**dass** der Luftkasten (17) einen kanalartigen Luftleitrahmen aufweist.

3. Kühleinrichtung nach Anspruch 1 oder 2,
**dadurch gekennzeichnet,**
**dass** die lösbaren Spannmittel (19, 20) zwischen dem Luftkasten (17) und dem Kühler (13) aus Klipsen, Klammern, Ankern, Haken, Ösen od. dgl. Rastgliedern gebildet sind.

4. Kühleinrichtung nach einem der Ansprüche 1 bis 3,
**dadurch gekennzeichnet,**
**dass** die lösbaren Spannmittel (19, 20) zwischen den beiden längsseitigen Wänden (25, 26) des Luftkastens (17) und dem Kühler (13) und hierbei vorzugsweise im Bereich der Einlassöffnung (18) vorgesehen sind.

5. Kühleinrichtung nach einem der Ansprüche 1 bis 4,
**dadurch gekennzeichnet,**
**dass** die lösbaren Spannmittel (19, 20) aus Zuggliedern (30) gebildet sind, die im Bereich der Einlassöffnung (18) und dem Lufteinlass des Kühlers (13) vorgelagert zwischen einer insbesondere unteren Wand (26) und einer dazu etwa parallelen, insbesondere oberen, Wand (25) des Luftkastens (17) verlaufen, an beiden Wänden (25, 26) angreifen und diese Wände (25, 26) mit den zugewandten Seiten (31, 32) des enthaltenen Kühlers (13) verspannen und dadurch den Luftkasten (17) mittels des enthaltenen Kühlers (13) versteifen.

6. Kühleinrichtung nach einem der Ansprüche 1 bis 5,
**dadurch gekennzeichnet,**
**dass** die Zugglieder (30) in Bezug auf den Luftkasten (17) verdrehgesichert gestaltet und/oder aufgenommen sind.

7. Kühleinrichtung nach einem der Ansprüche 1 bis 6,
**dadurch gekennzeichnet,**
**dass** die Zugglieder (30) an einem Ende, vorzugsweise am oberen Ende, eine eine Öffnung (34) enthaltende, quer abstrebende Lasche (33) aufweisen und dass der Luftkasten (17) je Zugglied (30) einen nach außen, vorzugsweise über die obere Wand (25), überstehenden Vorsprung (35) aufweist, der beim Auflegen der Lasche (33) formschlüssig in deren Öffnung (34) eingreift.

8. Kühleinrichtung nach Anspruch 7,
**dadurch gekennzeichnet,**
**dass** der Vorsprung (35) am freien Ende einen quer abstehenden Sicherungsvorsprung (36) aufweist, der die Lasche (33) außen übergreift.

9. Kühleinrichtung nach einem der Ansprüche 1 bis 8,
**dadurch gekennzeichnet,**
**dass** die Zugglieder (30) an einem Ende, vorzugsweise am unteren Ende, ein Verdrehsicherungselement (37), vorzugsweise einen vieleckigen, insbesondere viereckigen, Fußteil (38), aufweisen und dass der Luftkasten (17) je Zugglied (30) im Bereich der Einlassöffnung (18), vorzugsweise am vorderen Rand der unteren Wand (26), eine Aufnahme (39), vorzugsweise einen konsolenartigen etwa U-förmigen Vorsprung (40) mitbeidseitigen Seitenwangen (41, 42), zum formschlüssigen und verdrehgesicherten Aufnehmen des Verdrehsicherungselements (37), insbesondere des Fußteils (38), des Zuggliedes (30) aufweist.

10. Kühleinrichtung nach Anspruch 9,
**dadurch gekennzeichnet,**
**dass** der konsolenartige Vorsprung (40) und jedes Zugglied (30) eine Bohrung (43, 45) enthält, die von einer Schraube (44) od. dgl. Spannbolzen zum Festspannen durchsetzbar ist.

11. Kühleinrichtung nach einem der Ansprüche 1 bis 10,
**dadurch gekennzeichnet,**
**dass** der Luftkasten (17) luftauslassseitig des Kühlers (13) eine, insbesondere oberseitige, Leitwand (25, 29) aufweist, die über eine dazu etwa parallele, insbesondere unterseitige, Wand (26) hinausragt und zusammen mit dieser und beidseitigen Stirnwänden (27, 28) eine Strömungsführung bildet.

12. Kühleinrichtung nach Anspruch 11,
**dadurch gekennzeichnet,**
**dass** die Leitwand (25) zumindest über einen Abschnitt (29) schräg verläuft oder gebogen ist.

13. Kühleinrichtung nach einem der Ansprüche 1 bis 12,
**gekennzeichnet durch**
am Luftkasten (17) angreifende Befestigungsmittel (23, 24), mittels denen der Luftkasten (17) mitsamt dem darin enthaltenen Kühler (13) am ersten Kühler (11) lösbar befestigbar ist.

14. Kühleinrichtung nach Anspruch 13,
**dadurch gekennzeichnet,**
**dass** die Befestigungsmittel (23, 24) am Luftkasten (17) vorzugsweise angeformte Haken (46) und/oder Haltelaschen (47) od. dgl. aufweisen.

15. Kühleinrichtung nach Anspruch 13 oder 14,
**dadurch gekennzeichnet,**
**dass** die Befestigungsmittel (23, 24) am Luftkasten (17), insbesondere an den Haltelaschen (47) dieses, angreifende Schrauben (49) od. dgl. Haltebolzen aufweisen.

16. Kühleinrichtung nach einem der Ansprüche 13 bis 15,
**dadurch gekennzeichnet,**
**dass** die Befestigungsmittel (23, 24) an beiden Endbereichen und oberseitig des Luftkastens (17) vorgesehen sind.

17. Kühleinrichtung nach einem der Ansprüche 1 bis 16,
**dadurch gekennzeichnet,**
**dass** der erste Kühler (11), insbesondere dessen Sammelkästen (21, 22), Aufnahmen (50, 51) für die Befestigungsmittel (23, 24) zur insbesondere lösbaren Befestigung des Luftkastens (17) mitsamt dem darin enthaltenen Kühler (13) daran aufweist.

18. Kühleinrichtung nach Anspruch 17,
**dadurch gekennzeichnet,**
**dass** die Aufnahmen (50, 51) aus Einhaköffnungen und/oder Einschraublöchern od. dgl. zur Aufnahme von einhängbaren Haken (46) bzw. einschraubbaren Schrauben (49) od. dgl. Haltebolzen gebildet sind.

19. Kühleinrichtung nach einem der Ansprüche 1 bis 18,
**dadurch gekennzeichnet,**
**dass** der Luftkasten (17) als etwa rechteckförmiges Langteil ausgebildet ist.

20. Kühleinrichtung nach einem der Ansprüche 1 bis 19,
**dadurch gekennzeichnet,**
**dass** der Luftkasten (17) aus einem einstückigen Formteil insbesondere aus Kunststoff gebildet ist.

21. Kühleinrichtung nach einem der Ansprüche 1 bis 20,
**dadurch gekennzeichnet,**
**dass** der Luftkasten (17) als dünnwandiges Leichtbauteil und/oder Kompaktbauteil ausgebildet ist.

22. Kühleinrichtung nach Anspruch 21,
**dadurch gekennzeichnet,**
**dass** die Wände (25 bis 28) des Luftkastens (17) dünnwandig mit einer Querschnittsdicke vorzugsweise etwa zwischen 2 und 3 mm ausgebildet sind.

23. Kühleinrichtung nach einem der Ansprüche 1 bis 22,
**dadurch gekennzeichnet,**
**dass** der Luftkasten (17), insbesondere dessen Wand (26) und Leitwand (25), angeformte versteifende Querrippen (52, 53, 54) aufweist.

24. Kühleinrichtung nach Anspruch 23,
**dadurch gekennzeichnet,**
**dass** im Luftkanal (14) luftauslassseitig des Kühlers (13) zwischen der Wand (26) und der Leitwand (25) diese verbindende und abstützende innere Querrippen (54) verlaufen, die in Abständen voneinander angeordnet sind.

25. Kühleinrichtung nach Anspruch 23,
**dadurch gekennzeichnet,**
**dass** die Wand (26) und/oder die Leitwand (25) auf ihrer dem Inneren des Luftkanals (14) abgewandten Außenseite äußere Querrippen (52, 53) aufweisen, die in Abständen voneinander angeordnet sind.

26. Kühleinrichtung nach einem der Ansprüche 1 bis 25,
**dadurch gekennzeichnet,**
**dass** der Luftkasten (17) im Bereich einer, vorzugsweise unteren, Vorderkante der Einlassöffnung (18) eine schräg verlaufende Rippe (55) oder bogenförmige Rippe, insbesondere Anström- und Leitlippe, aufweist.

27. Kühleinrichtung nach einem der Ansprüche 1 bis 26,
**dadurch gekennzeichnet,**
**dass** der weitere Kühler (13) innerhalb der Ebene angeordnet ist, innerhalb der sich der erste Kühler (11) erstreckt.

28. Kühleinrichtung nach einem der Ansprüche 1 bis 27,
**dadurch gekennzeichnet,**
**dass** der Luftkasten (17) mit dem darin enthaltenen weiteren Kühler (13) sich ohne wesentlichen Abstand an eine Seite des ersten Kühlers (11) anschließt.

29. Kühleinrichtung nach einem der Ansprüche 1 bis 28,
**dadurch gekennzeichnet,**
**dass** der Luftkasten (17) mit dem darin enthaltenen Kühler (13) unterhalb des ersten Kühlers (11) und mit Querverlauf angeordnet ist.

## Claims

1. Cooling device for internal-combustion engines, in particular of motor vehicles, comprising a first radiator (11), which can be loaded with air, for the coolant of the internal-combustion engine, a further radiator (13), which can be loaded with air, for a different medium to be cooled, for example engine oil, transmission oil or the like, and an air duct (14) for guided carrying away of the outgoing air from the further radiator (13), **characterised in that** the further radiator (13) is inserted in an air receiver (17) enclosing the radiator (13) and simultaneously containing the air duct (14), the inlet aperture (18) of which air receiver runs substantially in the same plane as the air inlet of the contained radiator (13) and which extends with its air duct (14) beyond the air outlet of the radiator (13), and **in that** the further radiator (13) is rigidly fixed to the air receiver (17) via detachable fixing means (19, 20) and is held on the first radiator (11).

2. Cooling device according to claim 1, **characterised in that** the air receiver (17) comprises a duct-like air guide frame.

3. Cooling device according to claim 1 or 2, **characterised in that** the detachable fixing means (19, 20) between the air receiver (17) and the radiator (13) are formed from clips, clamps, anchors, hooks, eyes or similar latching members.

4. Cooling device according to any of claims 1 to 3, **characterised in that** the detachable fixing means (19, 20) are provided between the two long-side walls (25, 26) of the air receiver (17) and the radiator (13) and in the process are preferably provided in the region of the inlet aperture (18).

5. Cooling device according to any of claims 1 to 4, **characterised in that** the detachable fixing means (19, 20) are formed from tension members (30) which extend in the region of the inlet aperture (18) and upstream of the air inlet of the radiator (13), between an in particular lower wall (26) and an in particular upper wall (25) substantially parallel thereto, of the air receiver (17), act on the two walls (25, 26) and brace these walls (25, 26) with the facing sides (31, 32) of the contained radiator (13) and consequently reinforce the air receiver (17) by means of the contained radiator (13).

6. Cooling device according to any of claims 1 to 5, **characterised in that** the tension members (30) are configured and/or are held so as to be secured against rotation with respect to the air receiver (17).

7. Cooling device according to any of claims 1 to 6, **characterised in that** the tension members (30) have at one end, preferably at the upper end, a transversely bracing bracket (33) containing an opening (34), and **in that** the air receiver (17) comprises one projection (35) projecting outwards, preferably beyond the upper wall (25), per tension member (30), which projection on placement of the bracket (33) engages with interlocking fit in the opening (34) thereof.

8. Cooling device according to claim 7, **characterised in that** the projection (35) has at the free end a transversely protruding securing projection (36) which outwardly overlaps the bracket (33).

9. Cooling device according to any of claims 1 to 8, **characterised in that** at one end, preferably at the lower end, the tension members (30) have an anti-torsion element (37), preferably a polygonal, in particular quadrilateral, base part (38), and **in that** the air receiver (17) has, in the region of the inlet aperture (18), preferably on the leading edge of the lower wall (26), a receiver (39), preferably a console-like, substantially U-shaped projection (40), per tension member (30), with side cheeks (41, 42) on either side, for interlocking and rotation-secured mounting of the anti-torsion element (37), in particular of the base part (38) of the tension member (30).

10. Cooling device according to claim 9, **characterised in that** the console-like projection (40) and each tension member (30) contains a hole (43, 45) which can be penetrated by a screw (44) or similar fixing bolts for secure fixing.

11. Cooling device according to any of claims 1 to 10, **characterised in that** the air receiver (17) has at the air outlet side of the radiator (13) an, in particular, upper side guiding wall (25, 29) projecting beyond an, in particular, lower side wall (26) substantially parallel thereto and together therewith and with the end walls (27, 28) on either side forms a flow guide.

12. Cooling device according to claim 11, **characterised in that** the guide wall (25) extends obliquely or is bent, at least over a portion (29).

13. Cooling device according to any of claims 1 to 12, **characterised by** fastening means (23, 24) acting on the air receiver (17) and by means of which the air receiver (17) can be detachably fastened, together with the radiator (13) contained therein, to the first radiator (11).

14. Cooling device according to claim 13, **characterised in that** the fastening means (23, 24) on the air receiver (17) preferably have formed-on hooks (46) and/or retaining tabs (47) or the like.

15. Cooling device according to claim 13 or 14, **characterised in that** the fastening means (23, 24) on the air receiver (17), in particular on the retaining tabs (47) thereof, comprise engaging screws (49) or similar retaining bolts.

16. Cooling device according to any of claims 13 to 15, **characterised in that** the fastening means (23, 24) are provided on both end regions and on the upper side of the air receiver (17).

17. Cooling device according to any of claims 1 to 16, **characterised in that** the first radiator (11) in particular the collecting tanks (21, 22) thereof comprise receivers (50, 51) for the fastening means (23, 24) for, in particular, detachable fastening of the air receiver (17) thereon, together with the radiator (13) contained therein.

18. Cooling device according to claim 17, **characterised in that** the receivers (50, 51) are formed from hook-in apertures and/or screw-in holes or the like for receiving hangable hooks (46) or screws (49) which can be screwed in or similar retaining bolts.

19. Cooling device according to any of claims 1 to 18, **characterised in that** the air receiver (17) is constructed as a substantially rectangular long part.

20. Cooling device according to any of claims 1 to 19, **characterised in that** the air receiver (17) is constructed from a one-piece moulded part, in particular made of plastics material.

21. Cooling device according to any of claims 1 to 20, **characterised in that** the air receiver (17) is constructed as a thin-walled light component and/or compact component.

22. Cooling device according to claim 21, **characterised in that** the walls (25 to 28) of the air receiver (17) are constructed so as to be thin-walled with a cross-sectional thickness preferably substantially between 2 and 3 mm.

23. Cooling device according to any of claims 1 to 22, **characterised in that** the air receiver (17), in particular the wall (26) and guiding wall (25) thereof, comprises formed-on reinforcing transverse ribs (52, 53, 54).

24. Cooling device according to claim 23, **characterised in that** supporting inner transverse ribs (54) extend in the air duct (14) at the air outlet side of the radiator (13) between the wall (26) and the guiding wall (25) so as to connect the walls, and are arranged with spacings from one another.

25. Cooling device according to claim 23, **characterised in that** the wall (26) and/or the guiding wall (25) comprise(s) on its/their outer side remote from the interior of the air duct (14) external transverse ribs (52, 53) arranged with spacings from one another.

26. Cooling device according to any of claims 1 to 25, **characterised in that** the air receiver (17) comprises an obliquely extending rib (55) or arcuate rib, in particular inflowing and guiding lip, in the region of a, preferably lower, leading edge of the inlet aperture (18).

27. Cooling device according to any of claims 1 to 26, **characterised in that** the further radiator (13) is arranged within the plane within which the first radiator (11) extends.

28. Cooling device according to any of claims 1 to 27, **characterised in that** the air receiver (17) with the further radiator (13) contained therein adjoins, without substantial spacing, one side of the first radiator (11).

29. Cooling device according to any of claims 1 to 28, **characterised in that** the air receiver (17) with the radiator (13) contained therein is arranged below the first radiator (11) and has a transverse course.

## Revendications

1. Dispositif de refroidissement pour moteurs à combustion interne, en particulier de véhicules, avec un premier radiateur (11), pouvant être chargé d'air, pour le produit réfrigérant du moteur à combustion interne, un radiateur supplémentaire (13), pouvant être chargé d'air, pour un autre milieu à réfrigérer, par exemple de l'huile moteur, de l'huile pour transmission ou similaires, et un conduit de ventilation (14) permettant la dérivation guidée de l'air sortant du radiateur supplémentaire (13), **caractérisé en ce que** le radiateur supplémentaire (13) est inséré dans une caisse à air (17) comprenant celui-ci et contenant en même temps le conduit de ventilation (14), l'orifice d'entrée (18) de la caisse passant dans le même plan que l'entrée d'air du radiateur (13) contenu et la caisse s'étendant avec son conduit de ventilation (14) au-delà de la sortie d'air du radiateur (13), et **en ce que** le radiateur supplémentaire (13) est serré solidement avec la caisse à air (17) à l'aide de moyens de serrage amovibles (19, 20) et tenu au niveau du premier radiateur (11).

2. Dispositif de refroidissement selon la revendication 1, **caractérisé en ce que** la caisse à air (17) présente un châssis de guidage d'air de type conduit.

3. Dispositif de refroidissement selon la revendication 1 ou 2, **caractérisé en ce que** les moyens de serrage amovibles (19, 20) entre la caisse à air (17) et le radiateur (13) se composent de clips, de pinces, d'ancrages, de crochets, d'oeillets ou d'éléments d'arrêt similaires.

4. Dispositif de refroidissement selon l'une quelconque des revendications 1 à 3, **caractérisé en ce que** les moyens de serrage amovibles (19, 20) sont prévus entre les deux parois du grand côté (25, 26) de la caisse à air (17) et le radiateur (13), et notamment de préférence au niveau de l'orifice d'entrée (18).

5. Dispositif de refroidissement selon l'une quelconque des revendications 1 à 4, **caractérisé en ce que** les moyens de serrage amovibles (19, 20) se composent d'éléments de traction (30) qui passent en amont au niveau de l'orifice d'entrée (18) et de l'entrée d'air du radiateur (13) entre une paroi (26), en particulier inférieure, et une paroi (25), en particulier supérieure, approximativement parallèle à celle-ci, de la caisse à air (17), s'engagent aux deux parois (25, 26) et serrent ces parois (25, 26) avec les côtés tournés vers celles-ci (31, 32) du radiateur contenu (13) et renforcent ainsi la caisse à air (17) au moyen du radiateur contenu (13).

6. Dispositif de refroidissement selon l'une quelconque des revendications 1 à 5, **caractérisé en ce que** les éléments de traction (30) sont réalisés et/ou logés de façon résistante à la torsion par rapport à la caisse à air (17).

7. Dispositif de refroidissement selon l'une quelconque des revendications 1 à 6, **caractérisé en ce que** les éléments de traction (30) présentent à une extrémité, de préférence à l'extrémité supérieure, une languette (33) arc-boutée transversalement et contenant un orifice (34), et **en ce que** la caisse à air (17) présente pour chaque élément de traction (30) une protubérance saillante (35), de préférence au-delà de la paroi supérieure (25), qui s'emboîte de façon positive dans l'orifice (34) de la languette (33) lorsque celle-ci est appliquée.

8. Dispositif de refroidissement selon la revendication 7, **caractérisé en ce que** la protubérance (35) présente à l'extrémité libre une protubérance de blocage (36) faisant saillie transversalement qui dépasse la languette (33) à l'extérieur.

9. Dispositif de refroidissement selon l'une quelconque des revendications 1 à 8, **caractérisé en ce que** les éléments de traction (30) présentent à une extrémité, de préférence à l'extrémité inférieure, un élément antitorsion (37), de préférence une partie d'embase (38) polygonale, en particulier rectangulaire, et **en ce que** la caisse à air (17) présente pour chaque élément de traction (30) au niveau de l'orifice d'entrée (18), de préférence au bord avant de la paroi inférieure (26), un logement (39), de préférence une protubérance (40) de type console, approximativement en forme de U, avec des joues latérales (41, 42) de chaque côté, pour une réception à engagement positif et résistante à la torsion de l'élément antitorsion (37), en particulier de la partie d'embase (38) de l'élément de traction (30).

10. Dispositif de refroidissement selon la revendication 9, **caractérisé en ce que** la protubérance de type console (40) et chaque élément de traction (30) contiennent un alésage (43, 45) qui peut être traversé par une vis (44) ou un boulon de serrage similaire pour le serrage.

11. Dispositif de refroidissement selon l'une quelconque des revendications 1 à 10, **caractérisé en ce que** la caisse à air (17) présente du côté de la sortie d'air du radiateur (13) une paroi de guidage (25, 29), en particulier du côté supérieur, qui fait saillie au-delà d'une paroi (26), en particulier du côté inférieur, approximativement parallèle à celle-ci, et forme avec celle-ci et des parois frontales (27, 28) de chaque côté un guidage d'écoulement.

12. Dispositif de refroidissement selon la revendication 11, **caractérisé en ce que** la paroi de guidage (25) s'étend de façon inclinée ou est courbée au moins sur une section (29).

13. Dispositif de refroidissement selon l'une quelconque des revendications 1 à 12, **caractérisé par** des moyens de fixation (23, 24) s'engageant à la caisse à air (17), au moyen desquels la caisse à air (17) avec le radiateur (13) contenu dans celle-ci peut être fixée de façon amovible au premier radiateur (11).

14. Dispositif de refroidissement selon la revendication 13, **caractérisé en ce que** les moyens de fixation (23, 24) présentent sur la caisse à air (17) de préférence des crochets rapportés (46) et/ou des languettes de retenue (47) ou similaires.

15. Dispositif de refroidissement selon la revendication 13 ou 14, **caractérisé en ce que** les moyens de fixation (23, 24) présentent sur la caisse à air (17), en particulier aux languettes de retenue (46) de celle-ci, des vis d'engagement (49) ou des boulons de retenue similaires.

16. Dispositif de refroidissement selon l'une quelconque des revendications 13 à 15, **caractérisé en ce que** les moyens de fixation (23, 24) sont prévus aux deux régions terminales et sur le côté supérieur de la caisse à air (17).

17. Dispositif de refroidissement selon l'une quelconque des revendications 1 à 16, **caractérisé en ce que** le premier radiateur (11), en particulier ses caisses collectrices (21, 22), présente des logements (50, 51) pour les moyens de fixation (23, 24) pour la fixation, en particulier amovible, de la caisse à air (17) avec le radiateur (13) contenu dans celle-ci.

18. Dispositif de refroidissement selon la revendication 17, **caractérisé en ce que** les logements (50, 51) se composent d'orifices d'accrochage et/ou de trous de vissage ou similaires pour recevoir des crochets à accrocher (46) ou des vis à visser (49) ou des boulons de retenue similaires.

19. Dispositif de refroidissement selon l'une quelconque des revendications 1 à 18, **caractérisé en ce que** la caisse à air (17) est réalisée comme une pièce oblongue approximativement rectangulaire.

20. Dispositif de refroidissement selon l'une quelconque des revendications 1 à 19, **caractérisé en ce que** la caisse à air (17) est réalisée à partir d'une pièce moulée intégrale, en particulier en matière plastique.

21. Dispositif de refroidissement selon l'une quelconque des revendications 1 à 20, **caractérisé en ce que** la caisse à air (17) est réalisée comme une pièce de construction légère à paroi mince et/ou une pièce de construction compacte.

22. Dispositif de refroidissement selon la revendication 21, **caractérisé en ce que** les parois (25 à 28) de la caisse à air (17) sont réalisées à paroi mince avec une épaisseur de section mesurant de préférence environ entre 2 à 3 mm.

23. Dispositif de refroidissement selon l'une quelconque des revendications 1 à 22, **caractérisé en ce que** la caisse à air (17), en particulier la paroi (26) et la paroi de guidage (25) de celle-ci, présente des nervures de renforcement transversales rapportées (52, 53, 54).

24. Dispositif de refroidissement selon la revendication 23, **caractérisé en ce que** dans le conduit de ventilation (14), du côté de la sortie d'air du radiateur (13), entre la paroi (26) et la paroi de guidage (25) s'étendent des nervures transversales intérieures (54), reliant et étayant ces parois, qui sont disposées de façon espacée les unes des autres.

25. Dispositif de refroidissement selon la revendication 23, **caractérisé en ce que** la paroi (26) et/ou la paroi de guidage (25) présentent sur leur face extérieure détournée de l'intérieur du conduit de ventilation (14) des nervures transversales extérieures (52, 53) qui disposées de façon espacée les unes des autres.

26. Dispositif de refroidissement selon l'une quelconque des revendications 1 à 25, **caractérisé en ce que** la caisse d'air (17) présente au niveau d'un bord avant, de préférence inférieur, de l'orifice d'entrée (18) une nervure s'étendant de façon inclinée (55) ou une nervure en arc, en particulier un rebord de soufflage et de guidage.

27. Dispositif de refroidissement selon l'une quelconque des revendications 1 à 26, **caractérisé en ce que** le radiateur supplémentaire (13) est disposé dans le plan dans lequel s'étend le premier radiateur (11).

28. Dispositif de refroidissement selon l'une quelconque des revendications 1 à 27, **caractérisé en ce que** la caisse à air (17) avec le radiateur supplémentaire (13) contenu dans celle-ci est adjacente sans espace substantiel à un côté du premier radiateur (11).

29. Dispositif de refroidissement selon l'une quelconque des revendications 1 à 28, **caractérisé en ce que** la caisse à air (17) avec le radiateur (13) contenu dans celle-ci est disposée au-dessous du premier radiateur (11) et en extension transversale.
